# EUROPEAN PATENT APPLICATION

(11) **EP 2 341 081 A1**
(43) Date of publication of application: **06.07.2011**
(21) Application number: 10194230.8
(22) Date of filing: 08.12.2010
(51) Int. Cl.: C08F 2/00, C08F 2/24

(54) **Process for making uniform polymer beads**

(30) Priority: 30.12.2009 US 335013 P
(71) Applicant: Rohm and Haas Company, Philadelphia, Pennsylvania 19106-2399 (US)
(72) Inventor: Deetz, Martin, North Wales, PA 19454 (US); Zabrodski, William, Bensalem, PA 19020 (US); Maikner, John J., Philadelphia, PA 19106-2399 (US)
(74) Representative: Buckley, Guy Julian

(57) **Abstract**

A process for making substantially uniform polymer particles in an aqueous dispersion comprising forming a monomer emulsion with an emulsifying agent, at least one monomer molecule, and an initiator; adding the monomer emulsion to at least a stabilizing agent and a plurality of oligomeric droplets; and polymerizing the at least one monomer molecule to form an aqueous dispersion of polymer particles.

## Description

This invention relates to processes for making polymer beads. More particularly, this invention relates to processes for making substantially uniform polymer beads.

To make polymer beads using seed expansion technology, a monomer phase may be emulsified by using surfactants, such as sodium lauryl sulfate and Triton™ X-450. One method of producing polymer beads is disclosed in U.S. Publication No. 2007/0066761, where seed particles are mixed with a monomer, initiator, chain-transfer agent, and a surfactant to form swellable particles, which are then mixed with a monomer and an initiator that is polymerized.

Another method of producing particle beads is described in U.S. Pat. No. 5,147,937, which discloses gradually combining a monomer mixture with an aqueous dispersion of emulsion-polymerized polymer particles in the presence of a dispersion stabilizer and an oil-soluble initiator.

Another method of producing polymer beads is disclosed in U.S. Patent No. 7,217,762. In this method, an aqueous dispersion of swollen seed particles is formed from swellable seed particles, an anionic surfactant, and a monomer selected from acrylic monomers, methacrylate monomers, and vinyl monomers; and polymerization of the monomer in the aqueous dispersion of swollen seed particles and a steric stabilizer and/or porogens is initiated.

The anionic surfactants used in these methods often work well as emulsifying agents, but are generally poor stabilizers for polymerizing uniform polymer beads. Instability often results in fused beads and possible suspension failure.

The invention seeks to improve upon the current art by providing a process using an emulsifying agent and a stabilizer that substantially eliminates any stability problems in the droplet stabilization and polymerization process.

One aspect of the invention provides a process for making substantially uniform polymer particles comprising forming a monomer emulsion having an emulsifying agent, at least one monomer molecule, and an initiator; adding the monomer emulsion to at least a stabilizing agent and a plurality of oligomeric droplets; and polymerizing the at least one monomer molecule to form an aqueous dispersion of polymer particles, having a 90/10 uniformity coefficient of 1.0 to 1.3.

Another aspect of the invention provides a process for making substantially uniform polymer particles comprising preparing an aqueous emulsion having a seed emulsifying agent, at least one monomer, a chain transfer agent, and a seed initiator; mixing the aqueous emulsion with at least a stabilizer and a plurality of seed particles to grow an aqueous dispersion medium of oligomeric droplets, having a 90/10 uniformity coefficient of 1.0 to 1.3; forming a monomer emulsion having an emulsifying agent, at least one monomer molecule, and an initiator; adding the monomer emulsion to at least a stabilizing agent and a plurality of oligomeric droplets; and polymerizing the at least one monomer molecule to form an aqueous dispersion of polymer particles, having a 90/10 uniformity coefficient of 1.0 to 1.3.

Yet another aspect of the invention provides a process for purifying an aqueous solution of mixed biomolecules comprising contacting the aqueous solution with at least one of the polymer particles and functionalized polymer particles made by the process of the invention.

Yet another aspect of the invention provides polymer particles made by the process of the invention.

The invention is directed to a process for making substantially uniform polymer beads, or polymer particles, including gels with polymer particles without porogens and porous polymer particles. A collection of particles are "uniform" if they have the same size and shape. The 90/10 uniformity coefficient of the particle is estimated as the ratio of the particle diameters at 90% and 10% of the particle size distribution. "Substantially uniform" means that the 90/10 coefficient ranges from 1.0 to 1.3.

The oligomeric droplets, or swollen particles, used in the process are made by preparing an aqueous emulsion having a seed emulsifying agent, at least one monomer, a chain transfer agent, and a seed initiator; and mixing the aqueous emulsion with at least a stabilizer and a plurality of seed particles to grow an aqueous dispersion medium of the oligomeric droplets, having a 90/10 uniformity coefficient of 1.0 to 1.3. Swollen particles are particles that readily absorb a compound and/or compounds under reaction conditions such that the particle is larger after absorbing that compound/those compounds.

The aqueous emulsion is prepared by mixing the seed emulsifying agent and at least one monomer. Suitable monomers include ethylenically unsaturated monomers, for example, (meth)acrylic ester monomers, including methyl acrylates, ethyl acrylates, butyl acrylates, 2-ethylhexyl acrylates, decyl acrylates, lauryl acrylates, methyl methacrylates, butyl methacrylates, ethyl methacrylates, isodecyl methacrylates, lauryl methacrylates, hydroxyethyl methacrylates, hydroxypropyl methacrylates, (meth)acrylonitriles, and (meth)acrylamides, acetoacetoxyethyl (meth)acrylates, acetoacetoxypropyl (meth)acrylates, 2-(3-oxazolidinyl)ethyl (meth)acrylates, tert-butylaminoethyl (meth)acrylates, ethyleneureido-functional monomers, allyl acetoacetates, ethylenes, propylenes, styrenes and substituted styrenes, butadienes, vinyl acetates, vinyl butyrates and other vinyl esters, vinyl monomers, such as vinyl chloride, vinyl toluene, and vinyl benzophenone, and vinylidene chloride. The term "(meth)" followed by another term such as acrylate or acrylamide, as used throughout the disclosure, refers to both acrylates or acrylamides and methacrylates and methacrylamides, respectively. Preferred monomers include butyl acrylate, styrene, and mixtures thereof.

Preferred seed emulsifying agents and emulsifying agents used to make the polymer particles, as described below, include proteins, polyvinyl alcohols, polyglycerol fatty acid esters, plant polysaccharides, cetyl trimethylammonium bromides and other alkyltrimethylammonium salts, cetylpyridinium chlorides, polyethoxylated tallow amines, benzalkonium chlorides, benzethonium chlorides, zwitterionics (amphoterics), dodecyl betaines, cocamidopropyl betaines, coco ampho glycinates, alkyl poly(ethylene oxides), alkylphenol poly(ethylene oxides), copolymers of poly(ethylene oxide) and poly(propylene oxide), alkyl polyglucosides, including octyl glucosides and decyl maltosides, fatty alcohols, cetyl alcohols, oleyl alcohols, cocamide monoethanolamines, cocamide diethanolamines, polysorbates, codecyl dimethylamine oxides, alginic acids, sodium alginates, potassium alginates, ammonium alginates, calcium alginates, propane-1,2-diol alginates, carrageenans, locust bean gums (carob gums), guar gums, tragacanths, gum acacias (gum arabics), xanthan gums, sorbitols, mannitols, glycerol, pectins, amidated pectins, microcrystalline/powdered celluloses, methylcelluloses, hydroxypropylcelluloses, hydroxypropyl-methylcelluloses, ethylmethylcelluloses, carboxymethylcelluloses, mono- and di-glycerides of fatty acids, esters of mono-and di- glycerides of fatty acids, sucrose esters of fatty acids, sucroglycerides, polyglycerol esters of fatty acids, and propane-1,2-diol esters of fatty acids. The emulsifying agent, or seed emulsifying agent, may also include similar compositions as long as it is not an anionic surfactant. A more preferred emulsifying agent, as well as seed emulsifying agent, is polyvinyl alcohol.

Preferably, the emulsifying agent, or seed emulsifying agent, is provided as an aqueous dispersion of the emulsifying agent, or seed emulsifying agent, in water. The amount of emulsifying agent, or seed emulsifying agent used ranges, preferably, from 0.1% to 10%, and more preferably, from 0.3% to 3%, by weight, based on the weight of monomer.

The aqueous emulsion may also include at least one chain transfer agent. Suitable chain transfer agents include, for example, halomethanes, disulfides, thiols (also called mercaptans), and metal complexes. Additional suitable chain transfer agents include various other compounds that have at least one readily abstractable hydrogen atom, and mixtures thereof. Chain transfer agents may be added in one or more additions or continuously, linearly or not, over most or all of the entire reaction period or during limited portions of the reaction period. The chain transfer agents may be added such that they comprise, preferably, up to 50%, and more preferably, 20% to 40%, by weight based on the total weight of monomer.

In addition, seed initiators may be used in making the aqueous emulsion. A seed initiator, or an initiator as used in the process for making polymer particles described below, is a compound that is capable of producing at least one free radical under conditions in which that free radical can interact with the monomer. Suitable initiators and seed initiators include, persulfates, such as sodium persulfates and ammonium persulfates, benzoyl peroxides, t-butyl peroctoates, t-amyl peroxypivalates, cumene hydroperoxides, t-butyl peroctoates, oil-soluble peroxides, oil-soluble azo compounds, and mixtures thereof. An initiator, or seed initiator, is "oil-soluble" if it has low solubility in water of 1%, by weight, based on the weight of water, or less. In some embodiments, the amount of initiator, or seed initiator, is, preferably, between 0.1 % and 8%, and more preferably, between 0.1 % and 4%, by weight based on the total weight of monomer, or monomer molecule, used in the process.

The at least one monomer, chain transfer agent, seed initiator and seed emulsifying agent and any other ingredients are mixed to form an emulsion. These ingredients may be mixed as is or one or more may be prepared as emulsions first and then the prepared emulsions are mixed or the ingredients may be mixed. Mixing of the emulsion may be performed by mechanical agitation, including shaking the mixture, stirring the mixture, passing the mixture through a static mixing element, ultrasonic emulsification, and contact with a rotating device. In some embodiments, the mechanical agitation provides "high shear" (i.e., it imparts a high shear rate to the ingredients).

In one example, the emulsion is pumped through an emulsifier, such as an IKA® magic LAB® inline emulsifier available from IKA Works, Inc., Wilmington, NC, or a modular laboratory mixing system.

This emulsion is fed at a desired rate and reaction temperature and mixed with a plurality of seed particles, or swellable particles, and a stabilizer to grow aqueous dispersed substantially uniform oligomeric droplets. Inhibitors, such as aqueous phase inhibiting salts and organic compounds, and/or swellants, such as plasticizers and solvents, may also be added to the mixture.

The seed particles may be made of any material that is in particulate form and may have any composition. Preferably, the seed particles comprise at least one monomer. Suitable monomers include those listed above. The seed particles have a mean particle diameter of, preferably, 0.1-50 µm, and more preferably, 2 to 15 µm.

Stabilizers are water-soluble polymers, such as, for example, polyvinyl alcohols, cellulose ethers, and mixtures thereof. Preferred stabilizers include proteins, polyvinyl alcohols, polyglycerol fatty acid esters, plant polysaccharides, cetyl trimethylammonium bromides and other alkyltrimethylammonium salts, cetylpyridinium chlorides, polyethoxylated tallow amines, benzalkonium chlorides, benzethonium chlorides, zwitterionics (amphoterics), dodecyl betaines, cocamidopropyl betaines, coco ampho glycinates, alkyl poly(ethylene oxides), alkylphenol poly(ethylene oxides), copolymers of poly(ethylene oxide) and poly(propylene oxide), alkyl polyglucosides, including octyl glucosides and decyl maltosides, fatty alcohols, cetyl alcohols, oleyl alcohols, cocamide monoethanolamines, cocamide diethanolamines, polysorbates, codecyl dimethylamine oxides, alginic acids, sodium alginates, potassium alginates, ammonium alginates, calcium alginates, propane-1,2-diol alginates, carrageenans, locust bean gums (carob gums), guar gums, tragacanths, gum acacias (gum arabics), xanthan gums, sorbitols, mannitols, glycerol, pectins, amidated pectins, microcrystalline/powdered celluloses, methylcelluloses, hydroxypropylcelluloses, hydroxypropyl-methylcelluloses, ethylmethylcelluloses, carboxymethylcelluloses, mono- and di-glycerides of fatty acids, esters of mono-and di-glycerides of fatty acids, sucrose esters of fatty acids, sucroglycerides, polyglycerol esters of fatty acids, and propane-1,2-diol esters of fatty acids. The stabilizer may also include similar compositions as long as it is not an anionic surfactant. A more preferred stabilizer is polyvinyl alcohol.

The amount of stabilizer is, preferably, from 0.1% to 15%, and more preferably, from 5% to 15%, by weight of stabilizer, based on a dry weight of the seed particles. In some embodiments, the stabilizer and the emulsifying agent are the same ingredient. In other embodiments, the stabilizer and the emulsifying agent are different.

In one example of the process, the stabilizer is mixed with the seed particles and the mixture is heated. The heated mixture is then mixed with the emulsion to form the oligomeric droplets.

In another example of the process, some or all of the at least one monomer is mixed with the seed particles using the following steps: the monomer becomes resident on or in the seed particles, possibly causing the initial particles to swell; such monomer then encounters one or more free radicals (presumably formed from one or more initiators) that are also resident on or in the initial particles; and such monomer then participates with another such monomer or monomers in a polymerization reaction.

The process may be performed once or may be repeated any number of times to reach a desired particle size. In some embodiments, the process will be performed on a first set of seed particles to produce initial oligomeric droplets, which are then used as seed particles in a subsequent performance of the process to produce secondary oligomeric droplets. In such embodiments, it is contemplated that any or all of the at least one monomer, chain transfer agent, and seed initiator used in making the secondary oligomeric droplets may be the same as, different from, or a mixture thereof, any or all of the at least one monomer, chain transfer agent, and seed initiator used in making the initial oligomeric droplets.

The oligomeric droplets have a 90/10 uniformity coefficient of, preferably, 1.0 to 1.3, and more preferably, 1.05 to 1.15. The number-average molecular weight (Mn) of the oligomers ranges from 400 to 2000.

In some embodiments, the mean particle diameter of the oligomeric droplets is larger than the mean particle diameter of the seed particles. The mean particle diameter of the oligomeric droplets may be larger than the mean particle diameter of the seed particles by a factor of, preferably, at least 1.5 times or higher, more preferably, at least 2 times higher, and most preferably, at least 4 times higher. Preferably, the oligomeric droplets have a mean particle diameter of 2-100 µm. More preferably, the oligomeric droplets have a mean particle diameter of 10-30 µm. Particle size may be measured by any available method, including laser diffraction, electroresistance counting, and photoanalysis.

One use for oligomeric droplets is in the production of polymer particles. Some of such polymer particles may be chosen or designed to be useful, for example, for one or more of the following purposes: light scattering and/or diffusion materials, surface coatings, surface matting agents, surface gloss reducers, surface texture modifiers, plastic additives, liquid crystal display spacers, standard samples, micro filters, controlled release agents, chromatographic resins, intermediates for preparation of functionalized chromatographic resins, adsorbents, solid phase synthesis resins, catalytic enzyme supports, milling media, dispersing media, enzyme immobilization materials, resins for affinity chromatography, or ion-exchange materials.

To make the polymer particles, polymerization is conducted by providing conditions in which the monomer molecules react to form at least one oligomer or polymer or mixture thereof. Suitable monomer molecules include ethylenically unsaturated monomers, for example, substituted (meth)acrylate ester monomers and (meth)acrylic ester monomers, including methyl acrylates, ethyl acrylates, butyl acrylates, 2-ethylhexyl acrylates, decyl acrylates, lauryl acrylates, methyl methacrylates, butyl methacrylates, ethyl methacrylates, isodecyl methacrylates, lauryl methacrylates, hydroxyethyl methacrylates, hydroxypropyl methacrylates, (meth)acrylonitriles, and (meth)acrylamides, acetoacetoxyethyl (meth)acrylates, acetoacetoxypropyl (meth)acrylates, 2-(3-oxazolidinyl)ethyl (meth)acrylates, tert-butylaminoethyl (meth)acrylates, ethyleneureido-functional monomers, allyl acetoacetates, ethylenes, propylenes, styrenes and substituted styrenes, butadienes, vinyl acetates, vinyl butyrates and other vinyl esters, vinyl monomers, such as vinyl chloride, vinyl toluene, and vinyl benzophenone, and vinylidene chloride.

Other suitable vinyl monomers include vinyl carboxylates, vinyl urethane monomers, vinyl aromatic monomers, and mixtures thereof. One example of a vinyl carboxylate is vinyl acetate; one example of a vinyl urethane monomer is triallyl isocyanurate and examples of vinyl aromatic monomers include styrene, divinyl benzene, and substituted versions thereof, such as, for example, alpha-methyl styrene. Some suitable substituted (meth)acrylate esters include, for example, esters of polyhydric alcohols with (meth)acrylic acid, such as, for example, ethylene glycol dimethacrylate, glycerol dimethacrylate, and mixtures thereof.

Further suitable vinyl monomers include alkyl esters of (meth)acrylic acid where the alkyl group has a functional group. In some cases, such a functional group is capable of reacting with other groups (which may be the same as or different from the functional group), either during or after polymerization of the monomer molecule. In some of such cases, the reacting of the functional group with other groups creates branch points or crosslink junctions in the polymer that result from polymerizing the monomer molecule. One example of such a functional group is the glycidyl group. One example of this type of monomer is glycidyl methacrylate. With all of the listed monomer molecules, the term "(meth)" followed by another term such as acrylate or acrylamide, as used throughout the disclosure, refers to both acrylates or acrylamides and methacrylates and methacrylamides, respectively.

In some embodiments, the amount of monomer molecules consumed in the formation of polymer is, preferably, at least 90%, more preferably, at least 95%, and most preferably, at least 99%, by weight of monomer molecules consumed, based on the total weight of monomer molecules used in the process of making the polymer particle. The monomer molecule or monomer molecules may be mixed with the oligomeric droplets before the start of the polymerization, during the polymerization, or a combination thereof. In some embodiments, one step of mixing oligomer droplets with at least one monomer molecule and possibly a porogen and one step of polymerizing the monomer molecule will be performed. In some embodiments, more than one of such mixing steps may be performed, and, independently, in some embodiments, more than one polymerizing step may be performed. In some embodiments, after a first portion of monomer molecule is mixed with the oligomeric droplets and polymerized, the resulting composition may be mixed with one or more further portions of monomer molecule (each of which may independently be the same as or different from monomers included in previous portions of monomer molecules), which would then be polymerized.

At any point in the process, the mixing of ingredients may be performed by any method, in any order. The ingredients may be mixed continuously as they flow through a continuous-flow reactor or added to a vessel together or individually, or gradually or suddenly to that vessel. For example, the seed particles or oligomeric droplets may be in the form of an aqueous dispersion. In the process, these seed particles or oligomeric droplets may be placed in the vessel and the other ingredients may be added individually to the vessel containing the seed particles or oligomeric droplets. Alternatively, the ingredients may be mixed together before the mixture is added to the vessel containing the seed particles or oligomeric droplets.

The aqueous dispersion and aqueous dispersion medium are formed by a polymerization process. The polymerization process may be run as a shot process or by feeding the monomers over time, as is well known in the art. The process may be conducted at from 10°C to 100°C, but may be conducted at any conditions at which polymers are formed.

In some embodiments, the monomer molecule is mixed with the aqueous dispersion and the monomer molecule is polymerized. In some embodiments, one or more monomer molecules may first be formed into an aqueous emulsion, which is then added to the aqueous dispersion medium.

Various optional ingredients may be included in the mixture of the aqueous dispersion medium of oligomeric droplets, stabilizer, and at least one monomer molecule. Such optional ingredients may be added, for example, to aid in conducting the polymerizing of the monomer molecule or to affect the properties of the finished polymer particles. Such optional ingredients may be added before, during, or after the mixing of the aqueous dispersion medium of oligomeric droplets, stabilizer and at least one monomer molecule. Optional ingredients include, for example, inhibitors, initiators, stabilizers, stabilizing agents, porogens, and mixtures thereof.

Suitable initiators and concentrations thereof include those listed above for the seed initiators. Suitable stabilizers are also listed above. The amount of stabilizer used in making the polymeric particles is, preferably, no more than 50% and more preferably, no more than 30%, by weight, based on a dry weight of the polymer particles. The initiators and stabilizers used in making the oligomeric droplets may be the same or different from those used in making the polymer particles.

Suitable stabilizing agents include water-soluble polymers, such as, for example, polyvinyl alcohols, cellulose ethers, and mixtures thereof. Preferred stabilizers include proteins, polyvinyl alcohols, polyglycerol fatty acid esters, plant polysaccharides, cetyl trimethylammonium bromides and other alkyltrimethylammonium salts, cetylpyridinium chlorides, polyethoxylated tallow amines, benzalkonium chlorides, benzethonium chlorides, zwitterionics (amphoterics), dodecyl betaines, cocamidopropyl betaines, coco ampho glycinates, alkyl poly(ethylene oxides), alkylphenol poly(ethylene oxides), copolymers of poly(ethylene oxide) and poly(propylene oxide), alkyl polyglucosides, including octyl glucosides and decyl maltosides, fatty alcohols, cetyl alcohols, oleyl alcohols, cocamide monoethanolamines, cocamide diethanolamines, polysorbates, codecyl dimethylamine oxides, alginic acids, sodium alginates, potassium alginates, ammonium alginates, calcium alginates, propane-1,2-diol alginates, carrageenans, locust bean gums (carob gums), guar gums, tragacanths, gum acacias (gum arabics), xanthan gums, sorbitols, mannitols, glycerol, pectins, amidated pectins, microcrystalline/powdered celluloses, methylcelluloses, hydroxypropylcelluloses, hydroxypropyl-methylcelluloses, ethylmethylcelluloses, carboxymethylcelluloses, mono- and di-glycerides of fatty acids, esters of mono-and di-glycerides of fatty acids, sucrose esters of fatty acids, sucroglycerides, polyglycerol esters of fatty acids, and propane-1,2-diol esters of fatty acids. The stabilizing agent may also include similar compositions as long as it is not an anionic surfactant. A more preferred stabilizer is cellulose ether. The amount of stabilizing agent used in making the polymeric particles is, preferably, 0.1-20% and more preferably, 0.5-5%, by weight, based on a dry weight of the polymer particles.

Some embodiments involve the use of one or more porogens. Porogens are compounds that are more soluble in monomer than in water and are poor solvents for the polymer formed by polymerizing the monomer. Preferred porogens include hydrocarbons, alcohols, ethers, ketones, esters, and mixtures thereof. The hydrocarbon portion of the porogen molecules may be linear, branched, cyclic, or a combination thereof. Exemplary hydrocarbon porogens include aliphatic hydrocarbons, such as iso-octane, and aromatic-containing hydrocarbons, such as xylene and toluene. Exemplary ester porogens include esters of aromatic carboxylic acids, such as dialkyl phthalates, esters of aliphatic carboxylic acids, such as butyl acetate, and dialkyl ether porogens with alkyl groups having 3 or more carbon atoms, such as dibutyl ether. Exemplary alcohol porogens include alcohols of linear, branched, or cyclic alkyls with 5 or more carbon atoms, including cyclohexanol or 4-methyl-2-pentanol. Exemplary ketone porogens include dialkyl ketones such as methyl isobutyl ketone. In some embodiments the ratio of the weight of porogen to the total weight of all the monomer molecules is, preferably, 0.1-10, more preferably, 0.25-5, and most preferably, 0.5-2.5.

The process for making the polymer particles may range from a few hours to a few days. The process also can be implemented on a small scale or large scale and performed using typical commercial equipment for polymerization.

In some embodiments, the polymer particles contain high molecular weight polymer, crosslinked polymer, or a mixture thereof. In some embodiments, polymer particles made by polymerizing the at least one monomer molecule contain an amount of material that is not soluble. The polymer particles have a mean particle diameter of, preferably, 1-1000 µm, more preferably, 3-600 µm, and most preferably, 10-250 µm.

The polymer particles may be functionalized. "Functionalized" means that the polymer particles are reacted with at least one reagent to chemically bind one or more functional groups, such as, for example, ions, to the polymer particles or to convert a chemical group on the polymer particle, such as, for example, an ester group, to a functional group, such as, for example, a carboxyl group. The polymer particles may be functionalized with ligands to form, for example, strong cation exchange resins, strong anion exchange resins, weak cation exchange resins, weak anion exchange resins, affinity resins, other functionalized resins, and combinations and mixtures thereof.

The polymer particles and functionalized polymer particles may also be used for purifying biomolecules, such as, for example, proteins, enzymes, and other biomolecules. Such purifying is sometimes performed by contacting the polymeric resin particles with an aqueous solution of mixed biomolecules, for example, by placing the polymer particles in a liquid chromatography column and passing the aqueous solution through the column.

The following examples are presented to illustrate the invention. In the examples, the following abbreviations have been used.
BA is butyl acrylate.
Da is Daltons.
DEP is diethyl phthalate.
D.I. is deionized.
EGDMA is ethylene glycol dimethacrylate.
GlyDMA is glycidyl methacrylate.
METHOCEL™ K100 cellulose ether is a hydroxypropyl methylcellulose with 23% methoxy substitution and 6.5% hydroxypropyl substitution where a 2% aqueous solution has a viscosity of 80 to 120 mPa·s.
MIBC is 4-methyl-2-pentanol.
PVOH is polyvinyl alcohol.
t-butyl is tert-butyl.
Rpm is rotations per minute.
C is Celsius; µm is micrometer or micron; ml is milliliter; g is gram; and min is minute.

### TEST METHODS

Particle size: Measurements were made using a Multisizer™ 3 Coulter Counter® made by Beckman Coulter, Brea, CA.

### EXAMPLES

### Example 1 Preparation of 58 µm GMA/GlyDMA porous particle in a 20 liter reactor

A 10 liter stainless steel tank equipped with overhead stirrer was charged with 3,213 g of D.I. water. A reactor was heated to 80 °C and 32.5 g of Gohsenol GR-14R PVOH made by Nippon GOHSEI, Japan was added slowly over 30 minutes. The PVOH solution was stirred for 1 hour at 80 °C and then cooled to 30 °C.

In a separate 30 liter tank, 9,707 g of the D.I water was charged and the tank was then heated to 55 °C and stirred at 100 rpm. To the tank, 48.8 g Methocel™ K100 made by The Dow Chemical Company, Philadelphia, PA was added slowly over 1 minute, heated to 80°C and held for 15 minutes. The tank was cooled to 25 °C.

In a separate 10 liter tank, 2,019 g of the prepared PVOH solution, 924.6 g of GMA, 616.4 g of GlyDMA, 2,457.7 g of DEP, 753.3 g of MIBC, and 21.3 g of t-butyl peroctoate were charged to the tank and the mixture was stirred at 200 rpm for 10 minutes to form the monomer emulsion.

In a 20 liter stainless steel reactor equipped with an overhead stirrer and condenser, 9,707 g of the Methocel solution and 239.2 g of a monosized, 14.7 µm styrene/BA oligomer seed was charged into the reactor with stirring set at 85 rpm. The reactor was heated to 40 °C over 1 hour, and the monomer mixture was then pumped at a rate of 165 ml/min using a pump through an IKA® Magic LAB® inline emulsifier made by IKA Works, Inc., Wilmington, NC set at 14,600 rpm to the reactor. At the end of the monomer feed, the line was flushed with 351.2 g of PVOH solution into the reactor. The temperature was maintained at 40 °C for 6 hours and then heated to 70 °C over 45 minutes. The reactor was maintained at a temperature of 75 °C for 1 hour, and then heated to 80 °C over 1 hour. The reactor was held at 80 °C for 12 hours and then cooled to 25 °C. A particle size of 58 µm and a 90/10 uniformity coefficient of 1.09 were obtained.

### Example 2 Preparation of 60 µm GMA/GlyDMA porous particle

A 600 ml beaker equipped with a magnetic stirrer was charged with 321 g of D.I. water. The beaker was heated to 80 °C and 3.25 g of Gohsenol GR-14R PVOH was added slowly over 10 minutes. The PVOH solution was stirred for 1 hour at 80 °C and then cooled to 30 °C.

In a separate beaker, 970 g of the D.I water was charged and the beaker was then heated to 80 °C and stirred using a magnetic stirrer. To the beaker, 4.88 g Methocel K100 was added slowly over 10 minutes. The Methocel was agitated for 1 hour at 80 °C and then cooled to 25 °C.

In a 1 liter beaker, 201.9 g of the prepared PVOH solution, 92.46 g of GMA, 61.64 g of EGDMA, 245.7 g of DEP, 753.3 g of MIBC (4-methyl-2-pentanol) and 2.13 g of t-butyl peroctoate were charged to the beaker and the mixture was stirred at 400 rpm for 10 minutes.

In a 2 liter glass reactor equipped with an overhead stirrer and condenser, 970 g of the Methocel solution and 23.9 g of a monosized, 14.7 µm styrene/BA seed was charged into the reactor stirring at 100 rpm. The reactor was heated to 40 °C over 1 hour, and the monomer mixture was then pumped at a rate of 33 ml/min using a FMI pump made by Fluid Metering, Inc., Syosset, NY through an IKA Magic LAB inline emulsifier set at 14,600 rpm to the reactor. At the end of the monomer feed, the line was flushed with 32.5 g of PVOH solution into the reactor. The temperature was maintained at 40 °C for 6 hours and then heated to 70 °C over 45 minutes. The reactor was maintained at a temperature of 75 °C for 1 hour and then heated to 80 °C for over 1 hour. The reactor was held at 80 °C for 12 hours and then cooled to 25 °C. A particle size of 59 µm and a 90/10 uniformity coefficient of 1.10 were obtained.

### Example 3 Preparation of 30 um GMA/EDGMA porous particle

A 600 ml beaker equipped with a magnetic stirrer was charged with 300 g of D.I. water. The beaker was heated to 80 °C and 3 g of Gohsenol GR-14R PVOH was added slowly over 10 minutes. The PVOH solution was stirred for 1 hour at 80 °C and then cooled to 30 °C.

In a separate beaker, 75 g of the D.I water was charged and the beaker was then heated to 80 °C and stirred using a magnetic stirrer. To the beaker, 6.25 g Methocel K100 was added slowly over 10 minutes. The Methocel was agitated for 1 hour at 80 °C and then cooled to 25 °C.

In a 1 liter beaker, 228.2 g of the prepared PVOH solution, 74.1 g of GMA, 49.4 g of EGDMA, 229.5 g of DEP, and 1.8 g of t-butyl peroctoate were charged to the beaker and the mixture was stirred at 400 rpm for 10 minutes.

In a 1 liter glass reactor equipped with an overhead stirrer and condenser, 198.0 g of the Methocel solution and 52.5 g of a monosized, 10.0 µm styrene/BA seed were charged into the reactor stirring at 100 rpm. The reactor was heated to 40 °C over 1 hour and the monomer mixture was then pumped at a rate of 33 ml/min using a FMI pump through an IKA Magic LAB inline emulsifier set at 11,000 rpm to the reactor. At the end of the monomer feed, the line was flushed with 56 g of PVOH solution into the reactor. The temperature was maintained at 40 °C for 6 hours and then heated to 70 °C over 45 minutes. The reactor was maintained at a temperature of 75 °C for 1 hour and then heated to 80 °C over 1 hour. The reactor was held at 80 °C for 12 hours and then cooled to 25 °C. A particle size of 30 µm and a 90/10 uniformity coefficient of 1.09 were obtained.

## Claims

1. A process for making substantially uniform polymer particles comprising:
forming a monomer emulsion having an emulsifying agent, at least one monomer molecule, and an initiator;
adding the monomer emulsion to at least a stabilizing agent and a plurality of oligomeric droplets; and
polymerizing the at least one monomer molecule to form an aqueous dispersion of polymer particles, having a 90/10 uniformity coefficient of 1.0 to 1.3.

2. The process of claim 1 wherein the monomer emulsion further comprises a porogen.

3. The process of claim 1 further comprising:
preparing an aqueous emulsion having a seed emulsifying agent, at least one monomer, a chain transfer agent, and a seed initiator; and
mixing the aqueous emulsion with at least a stabilizer and a plurality of seed particles to grow an aqueous dispersion medium of the oligomeric droplets, having a 90/10 uniformity coefficient of 1.0 to 1.3.

4. The process of claim 1 wherein the adding comprises:
combining the oligomeric droplets to the stabilizing agent to form a mixture;
feeding the monomer emulsion into the mixture;
heating the mixture; and
forming the aqueous dispersion of polymer particles.

5. The process of claim 1 wherein the emulsifying agent comprises polyvinyl alcohol.

6. The process of claim 1 wherein the polymer particles comprise a 90/10 uniformity coefficient of 1.05 to 1.15.

7. The process of claim 1 further comprising:
reacting the polymer particles with at least one reagent to at least one of chemically bind at least one functional group to the polymer particles and convert a chemical group on the polymer particles to a functional group.

8. A process for purifying an aqueous solution of mixed biomolecules comprising:
contacting the aqueous solution with at least one of polymer particles and functionalized polymer particles made by the process of claim 1.

9. Polymer particles made by the process of claim 1.

10. A process for making substantially uniform polymer particles comprising:
preparing an aqueous emulsion having a seed emulsifying agent, at least one monomer, a chain transfer agent, and a seed initiator;
mixing the aqueous emulsion with at least a stabilizer and a plurality of seed particles to grow an aqueous dispersion medium of oligomeric droplets, having a 90/10 uniformity coefficient of 1.0 to 1.3;
forming a monomer emulsion having an emulsifying agent, at least one monomer molecule, and an initiator;
adding the monomer emulsion to at least a stabilizing agent and a plurality of oligomeric droplets; and
polymerizing the at least one monomer molecule to form an aqueous dispersion of polymer particles, having a 90/10 uniformity coefficient of 1.0 to 1.3.
